# EUROPEAN PATENT APPLICATION

(11) **EP 4 474 831 A1**
(43) Date of publication of application: **11.12.2024**
(21) Application number: 24176272.3
(22) Date of filing: 16.05.2024
(51) Int. Cl.: G01P 15/125, G01P 15/13, B81C 1/00, G01P 15/08

(54) **ACCELEROMETER INCLUDING PROOF MASS FORMED BY SELECTIVE LASER ETCHING**

(30) Priority: 09.06.2023 US 202318332582
(71) Applicant: Honeywell International Inc., Charlotte, NC 28202 (US)
(72) Inventor: DWYER, Paul W., Charlotte, 28202 (US)
(74) Representative: Haseltine Lake Kempner LLP

(57) **Abstract**

An example proof mass includes a substrate; one or more etched apertures in the substrate; and one or more integrated coils, wherein the one or more etched apertures are formed by selective laser etching, wherein the one or more integrated coils are formed by laser ablation.

## Description

### TECHNICAL FIELD

The present disclosure relates to an accelerometer device.

### BACKGROUND

Aerospace applications depend on accurately measuring acceleration in various directions. An accelerometer is a type of device that may be used to accurately measure acceleration for such aerospace applications. An accelerometer is an electro-mechanical motion device that produces varying electrical signals in the presence of varying acceleration forces applied to the device, with the electrical signals being indicative of the acceleration experienced by the device.

### SUMMARY

The disclosure describes a proof mass, a proof mass assembly, and/or an accelerometer with at least one of one or more apertures in the proof mass and/or one or more integrated coils on the proof mass. The disclosure further describes techniques for making a proof mass, a proof mass assembly and accelerometers with at least one of one or more apertures in the proof mass and/or one or more integrated coils on the proof mass. In some examples, a proof mass, a proof mass assembly, and/or accelerometer with an integrated coil on the proof mass, as described in the techniques herein, may reduce or remove the differences of TCE between the coils and the proof mass.

For example, a proof mass may comprise a quartz substrate, such as a fused quartz substrate. One or more apertures may be selectively laser etched into the proof mass to house an integrated coil. A metallic substance, such as gold or aluminum, may be sputtered over the one or more apertures to form one or more integrated coils. Laser ablating the sputtered metallic substance may form coil turns.

In some examples, forming an integrated metallic coil on the proof mass with selective laser etching may provide less or no uncertainty of the location of the coil, may reduce or remove welds or heavy copper, and may reduce or remove TCE differences between the coils and the quartz substrate.

In some examples, one or more apertures may be selectively laser etched to remove mass from the body of the proof mass, which may improve servo capability of the proof mass and/or improve sensitivity of the accelerometer.

In some examples, the proof mass may be laser etched, such as via selective laser etching, from a single, monolithic quartz substrate. In other examples, the proof mass assembly may comprise components separately made from the same material and subsequently attached without the use of additional materials. In some examples, the quartz substrate may be a fused quartz substrate, a crystalline quartz substrate, a monolithic quartz substrate, or a monolithic crystalline quartz substrate.

In some examples, the disclosure describes a proof mass comprising a substrate; one or more etched apertures in the substrate; and one or more integrated coils, wherein the one or more etched apertures are formed by selective laser etching, wherein the one or more integrated coils are formed by laser ablation.

In some examples, the disclosure describes a proof mass assembly comprising a proof mass having one or more etched apertures; a proof mass support; and a flexure connecting the proof mass to the proof mass support, wherein the proof mass is configured to rotate relative to the proof mass support via the flexure, wherein the one or more etched apertures are formed by selective laser etching.

In some examples, the disclosure describes a method comprising selective laser etching one or more isolated apertures within a proof mass; sputtering a metallic material on surface of the proof mass; and laser ablating the sputtered metallic material to form one or more integrated coils on the proof mass.

The details of one or more examples are set forth in the accompanying drawings and the description below. Other features, objects, and advantages will be apparent from the description and drawings, and from the claims.

### BRIEF DESCRIPTION OF THE FIGURES

FIG 1 is a conceptual three-dimensional drawing illustrating an example of an accelerometer, in accordance with one or more techniques of this disclosure.
FIG. 2 is a conceptual diagram illustrating an example accelerometer, in accordance with one or more techniques of this disclosure.
FIG. 3 is a conceptual diagram illustrating an example proof mass assembly with one or more apertures, in accordance with one or more techniques of this disclosure.
FIG. 4 is a conceptual diagram illustrating an example proof mass assembly with one or more integrated coils, in accordance with one or more techniques of this disclosure.
FIG. 5 is a conceptual diagram illustrating a side-view of an example proof mass assembly with one or more apertures and one or more integrated coils, in accordance with one or more techniques of this disclosure.
FIG. 6 is a flow diagram illustrating an example technique of making a proof mass, in accordance with one or more techniques of this disclosure.

### DETAILED DESCRIPTION

The accuracy and precision of accelerometers are a function of the ability to model the device accurately. Stresses due to differences in thermal coefficients of expansion (TCEs) make producing accurate models more difficult, which may degrade the precision of the navigation function of the accelerometer. Models that do not represent the device properly may prevent certain applications, such as navigation systems, from performing correctly. Some configurations of force-rebalance accelerometers, such as a Q-FLEX^{®} accelerometer made by Honeywell International, Inc., include free-standing copper coils bonded to a quartz proof mass. The copper coils have a higher TCE than the quartz part to which the coils are attached, which results in thermal strains moving the coils radially in the magnetic field over temperature.

In addition, in some configurations of force-rebalance accelerometers, modifying the location of the magnetic center by cutting slots in the return path in the area of the flexures reduces the magnetic flux near the flexures and moves the magnetic center to the mass center of the proof mass. This asymmetry causes the Lorentz force in the pendulous axis to be greater on the portion of the coil away from the flexures than that of the coil near the flexures.

In some examples, unlike wet-etching, standard laser ablation, or standard laser cutting, the process of using a laser, such as a precision focused laser, to selective laser etch a substate to create a proof mass or a proof mass assembly with one or more of one or more apertures and/or integrated coils may help produce more precise locations of the one or more apertures in the proof mass and/or the one or more integrated coils to remove mass of the proof mass, correspond the locations or sizes of the one or more apertures to the width and number of turns of the integrated coils, and/or enable a proof mass that has flexures to have a center of mass and a geometric center to be at a same location. In some examples, this may improve servo capability of the proof mass and/or improve sensitivity of the accelerometer. In some examples, adjusting a mass of a proof mass by forming one or more apertures in proof the mass by selective laser etching may reduce stiffness of portions of the proof mass where the one or more apertures are formed, which may enable modification of the resonant frequency of the proof mass to a particular resonance.

In some examples, forming an integrated metallic coil on the proof mass with selective laser etching may provide less or no uncertainty of the location of the coil, may reduce or remove welds or heavy copper, and may reduce or remove TCE differences between the coils and the quartz substrate. In some examples, by forming one or more apertures to have a center of mass of proof mass at a same location as a geometric center of proof mass may allow for manufacturing a symmetrical magnetic circuit with the center of magnetic force of proof mass also at the geometric center. When the device is activated, a couple may be minimized or effectively not produced by an asymmetrical Lorentz force, which will simplify the startup dynamics.

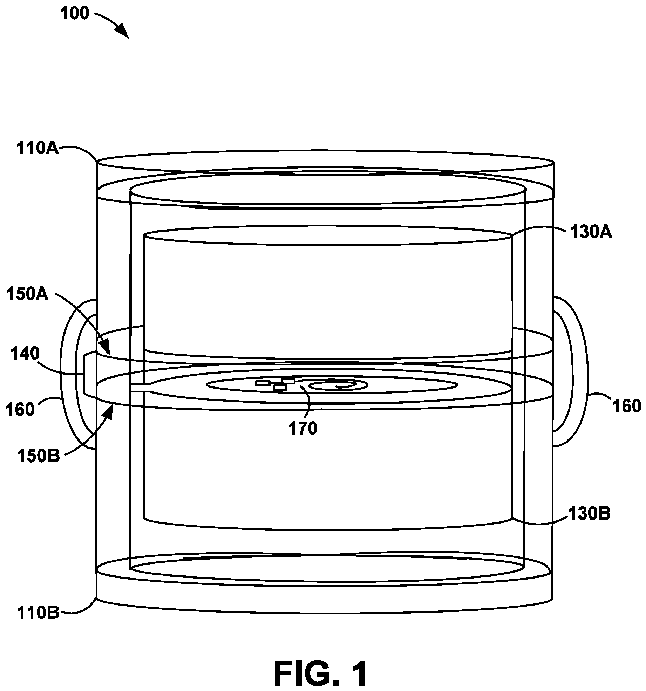

FIG. 1 is a conceptual three-dimensional drawing illustrating an example accelerometer system 100, in accordance with one or more techniques of this disclosure. As illustrated in the example of FIG 1, system 100 may include a first enclosure piece 110A, a second enclosure piece 110B, a first magnetic assembly piece 130A, a second magnetic assembly piece 130B, a proof mass 140, a mechanical bond 160, and electrical circuitry 170.

In some examples, first enclosure piece 110A and second enclosure piece 110B may be monolithic structures. First enclosure piece 110A and second enclosure piece 110B (collectively "enclosure 110") may be configured to enclose components of the accelerometer. For example, first enclosure piece 110A and second enclosure piece 110B may each have a cylindrical cup structure. First enclosure piece 110A may include a proximal end that forms a base of the cup structure defined by first enclosure piece 110A. A proximal end of second enclosure piece 110B may include a circular rim of the cup structure defined by second enclosure piece 110B. First enclosure piece 110A may include a distal end that forms the circular rim of the cup structure defined by first enclosure piece 110A. A distal end of second enclosure piece 110B may be defined by a base of the cup structure defined by second enclosure piece 110B. First enclosure piece 110A and second enclosure piece 110B may each include an inner face and an outer face. The inner face may include any face or portion of a face on a concave portion of the cup structure. The outer face may include any face or portion of a face on a convex portion of the cup structure.

In some examples, first magnetic assembly piece 130 and second magnetic assembly piece 110B (collectively "magnetic assembly 110") may each form cylindrical cup structures. While enclosure 110 may be used to transfer the location of the stress, magnetic assembly 110 may provide magnetic fields in proximity to the coils to produce the Lorentz force for servo loop closure.

An outer face of first magnetic assembly piece 130A may include any face or portion of a face on a concave portion of the cup structure defined by first magnetic assembly piece 130A. An outer face of second magnetic assembly piece 130 may include any face or portion of a face on a concave portion of the cup structure defined by second magnetic assembly piece 130B. An inner face of first magnetic assembly piece 130A may include any face or portion of a face on a convex portion of the cup structure defined by first magnetic assembly piece 130A. An inner face of second magnetic assembly piece 130B may include any face or portion of a face on a convex portion of the cup structure defined by second magnetic assembly piece 130B.

Enclosure 110 may be configured to enclose a first magnetic assembly piece 130A, and a second magnetically assembly piece (collectively "magnetic assembly 130") by coupling enclosure 110 to proof mass 140. For example, proof mass 140, having a proximal face, may be coupled to the distal face of first enclosure piece 110A forming a first joint 150A. Proof mass 140 having a distal face, may be coupled to the proximal face of second enclosure piece 110B forming a second joint 150B. An outside ring of proof mass 140 may form first joint 150A with first enclosure piece 110A, and second joint 150B with second enclosure piece 110B. In some examples, a mechanical bond may be formed across first joint 150A and the second joint 150B. In some examples, first joint 150A and second joint 150B may be bonded with a quartz-to-quartz laser weld using selective laser-induced etching (SLE) technology.

Coupling enclosure 110 to proof mass 140 also protects some electrical circuitry of the accelerometer from damage. For examples, electrical circuitry, including a torquer coil, may be coupled to the proof mass. In some examples, the electrical circuitry may be oriented on a middle portion of the proof mass, mechanically coupled to the ring of the proof mass by one or more flexures. Coupling enclosure 110 to proof mass 140, (e.g., the ring of proof mass 140) allows the movement of magnetic assembly 130 to be isolated from temperature strain introduced by enclosure 110.

The electrical circuitry may be configured to generate an electrical signal based on an acceleration experienced by accelerometer system 100. For example, in some configurations accelerometer system 100 may include a force rebalance accelerometer, in which the electrical signal corresponds to an amount of current needed to produce a magnetic field that prevents displacement of proof mass 140 in the presence of an acceleration. That is, the electrical signal may correspond to an amount of current needed to rebalance proof mass 140 to a null position in the presence of acceleration. Alternatively or additionally, accelerometer system 100 may include a capacitive accelerometer, in which the electrical signal corresponds to a change of capacitance in a capacitive gap between proof mass 140 and another capacitor plate. Regardless of the accelerometer sensing technology, or combination of technologies, used, the electrical signal generally refers to any electrical signal from which processing circuitry, either included in accelerometer system 100 or external to accelerometer system 100, can determine an acceleration value.

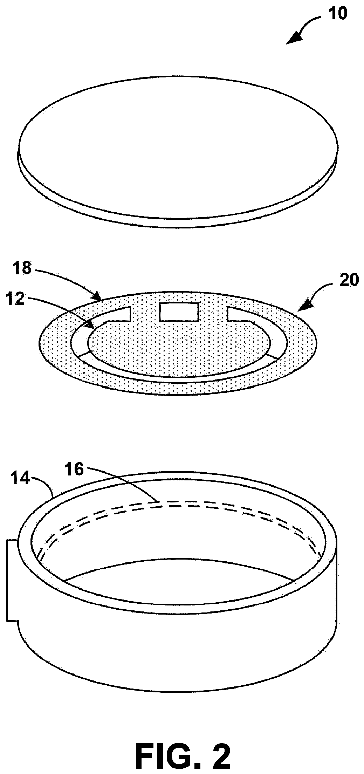

FIG. 2 is a conceptual diagram illustrating an exploded view of an example accelerometer 10. Accelerometer 10 includes a proof mass 12, and a housing 14 enclosing proof mass 12. In some examples, accelerometer 10 may include circuitry that generates an electromagnetic force to prevent displacement of proof mass 12 in the presence of acceleration. An amount of current needed to produce an electromagnetic force sufficient to cause proof mass 12 to remain in a null position in the presence of acceleration may be translated into an acceleration value. Proof mass 12 may alternatively or additionally exhibit a change in position, move, or oscillate in response to acceleration, and accelerometer 10 may include circuitry that senses or detects such a change and generate a signal indicative of the acceleration. Proof mass 12 may include an in-plane proof mass or an out-of-plane proof mass.

Proof mass 12 may be secured, coupled to, or mounted to housing 14 at a location 16 defined by housing 14. In some examples, proof mass 12 may be secured to housing 14 about a periphery of proof mass 12, and location 16 may extend about a periphery of housing 14. In other examples, location 16 may not extend about the periphery, and proof mass 12 may only be secured, coupled to, or mounted at one or more predetermined areas or regions of housing 14.

In some examples, accelerometer 10 includes a proof mass assembly 20 including one or more of proof mass 12 and proof mass support 18. Proof mass support 18 may couple or secure proof mass 12 to proof mass assembly 20, while allowing proof mass 12 to move in response to acceleration. While proof mass support 18 may be distinct or separate from proof mass 12, in other examples, proof mass support 18 may be defined by an extension of proof mass 12 or of a component of proof assembly 20. In some examples, one or more of proof mass 12, proof mass support 18, or other components of proof mass assembly 20 is monolithic. For example, one or more of proof mass 12, proof mass support 18, or other components of proof mass assembly 20 may be unitary or integrated in a single continuous component. In other examples, one or more components of proof mass 12, proof mass support 18, or other components of proof mass assembly 20 may be monolithic or unitary, while one or more other components may be discrete. In some examples, proof mass 12 and/or proof mass support may be laser etched, such as via selective laser etching, from a single, monolithic quartz substrate. In other examples, proof mass assembly 20 may comprise components separately made from the same material and subsequently attached without the use of additional materials. In some examples, the quartz substrate may be a fused quartz substrate, a crystalline quartz substrate, a monolithic quartz substrate, or a monolithic crystalline quartz substrate.

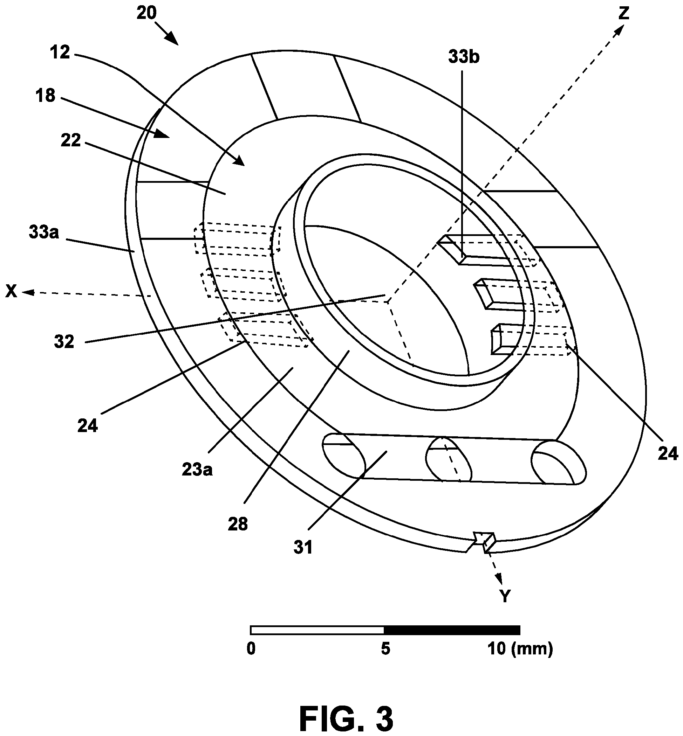

FIGS. 3-5 show conceptual diagrams of one or more examples of proof mass 12, proof mass 140, proof mass support 18, and proof mass assembly 20. While the following description of FIGS. 3-5 may reference proof mass 12, in some examples, the following description may also apply to proof mass 140.

FIG. 3 shows a conceptual diagram of an example of proof mass 12 and proof mass support 18. Proof mass 12 comprises a substate 22 and one or more etched apertures 24. In some examples, proof mass 12 and proof mass support 18 are monolithic and comprise a substrate 22. In some examples, substrate 22 may be a monolithic substrate. In some examples, substrate 22 may be a quartz substrate. In some examples, substrate 22 may be a fused quartz substrate. In some examples, substrate 22 may be a crystalline quartz substrate. In some examples, substrate 22 may be a monolithic quartz substrate. In some examples, substrate 22 may be a monolithic crystalline quartz substrate. In some examples, one or more flexures 31 connect the proof mass 12 to the proof mass support 18. In some examples, proof mass 12 is configured to rotate relative to proof mass support 18 via one or more flexures 31, e.g., in the y-z plane.

Proof mass 12 may have one or more etched apertures 24 in the substrate 22. The one or more etched apertures 24 may be formed by selective laser etching.

In some examples, selective laser etching may selectively modify a portion of a material. In some examples, selective laser etching may selectively modify one or more characteristics of a portion of a material. In some examples, the modified portion of the material may be on a surface of the material, within the bulk of the material at a depth and/or distance from a surface of the material, or both. In some examples, the selective laser etching may selectively modify the portion of the material in preparation for removal of the material, e.g., via a subsequent wet-etch process. In some examples, the subsequent wet-etch process may remove the modified portions of the material by placing the treated material being placed in a wet bath, such as hydrofluoric acid or potassium hydroxide. The liquid in the wet bath, such as hydrofluoric acid or potassium hydroxide, may degrade the modified portions of the material while not degrading the other portions of the material. For example, the hydrofluoric acid or potassium hydroxide may only degrade and remove the portions of the material that were modified by the laser. For example, the selective laser etching may function as a 3D lithographic laser printing where the material, e.g., a fused quartz substrate, functions as a positive-tone resist. In some examples, the selective laser etching may comprise picosecond and/or femtosecond laser radiation, e.g., one or more picosecond and/or femtosecond laser pulses configured to irradiate the portion of the material. In some examples, a laser may modify a portion of the material to be removed by wet-etching, as described above, by applying one or more picosecond and/or femtosecond laser pulses configured to irradiate the portion of the material.

In some examples, performing selective laser etching to form one or more etched apertures 24 may remove unwanted material of the substrate 22. In some examples, selective laser etching one or more etched apertures 24 in substrate 22 of proof mass 12 may reduce the mass of proof mass 12. Reducing mass of proof mass 12 may make up for fewer coil turns. In some examples, one or more etched apertures 24 may be formed in proof mass 12 to reduce up to 80% of the mass of the proof mass 12. In some examples, forming one or more etched apertures 24 in proof mass 12 may reduce mass of the proof mass 12 by other percentages as well.

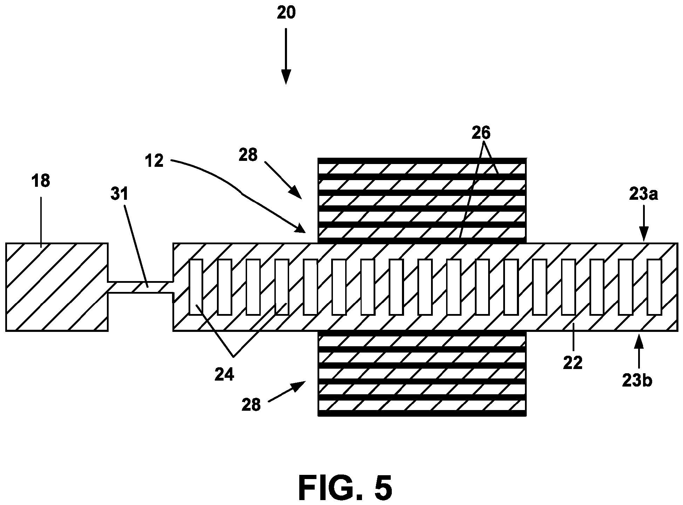

In some examples, one or more etched apertures 24 may be formed between surfaces 23a, 23b of substrate 22, similar to a tunnel-shape, where top surface 23a and bottom surface 23b (shown in FIG. 5) of substrate 22 remain continuous and the one or more etched apertures 24 is formed between top surface 23a and bottom surface 23b of substrate 22 to remove mass of proof mass 12. In some examples, forming one or more etched apertures 24 between top surface 23a and bottom surface 23b of substrate 22 may enable one or more surfaces 23a, 23b of substrate 22 to be metallized while modifying the mass and/or density of proof mass 12 by forming one or more etched apertures 24 between the surfaces 23a, 23b. In some examples, one or more etched apertures 24 may be formed between top surface 23a and bottom surface 23b of substrate 22 via one or more small holes on a side of substrate 22, such as an exterior side 33a or an interior side 33b of substrate 22.

A proof mass 12 with etched flexures 31, without etched apertures, has an asymmetrical center of mass with a center of mass of the proof mass 12 being at a different position than the geometric center of proof mass 12. This may lead to asymmetry in the Lorentz force across a coil.

In some examples, one or more apertures 24 are formed in proof mass 12 at particular positions to have the center of mass of the proof mass 12 be positioned at the geometric center of proof mass 12. For example, forming one or more apertures 24 in a proof mass 12 with etched flexures 31, may positioned a center of mass of proof mass 12 at a same location as a geometric center of proof mass 12, such as position 32, as shown as an example in FIGS. 3-4. In some examples, a proof mass 12 having a center of mass and a geometric center at a same position may enable a more simplistic excitation ring configuration, may remove a need for linearity notches, and/or may remove asymmetry in the Lorentz force across a coil. In some examples, forming one or more apertures 24 to have a center of mass of proof mass 12 at a same location as a geometric center of proof mass 12 will allow manufacturing a symmetrical magnetic circuit with the center of magnetic force of proof mass also at the geometric center. When the device is activated, there will no longer be a couple produced by an asymmetrical Lorentz force, which will simplify the startup dynamics.

The mass and/or density of the proof mass 12 may be adjusted by forming one or more apertures 24 in proof mass 12 and may adjust the mass of proof mass 12 by forming one or more apertures 24 in particular locations of proof mass 12 to remove mass of proof mass 12 at those particular locations that may improve servo capability of proof mass 12 and/or improve sensitivity of accelerometer 10. In some examples, adjusting mass of proof mass 12 by forming one or more apertures 24 in proof mass 12 may reduce stiffness of portions of proof mass 12 where the one or more apertures 24 are formed, which may enable modification of resonant frequency of proof mass 12 to a particular resonance.

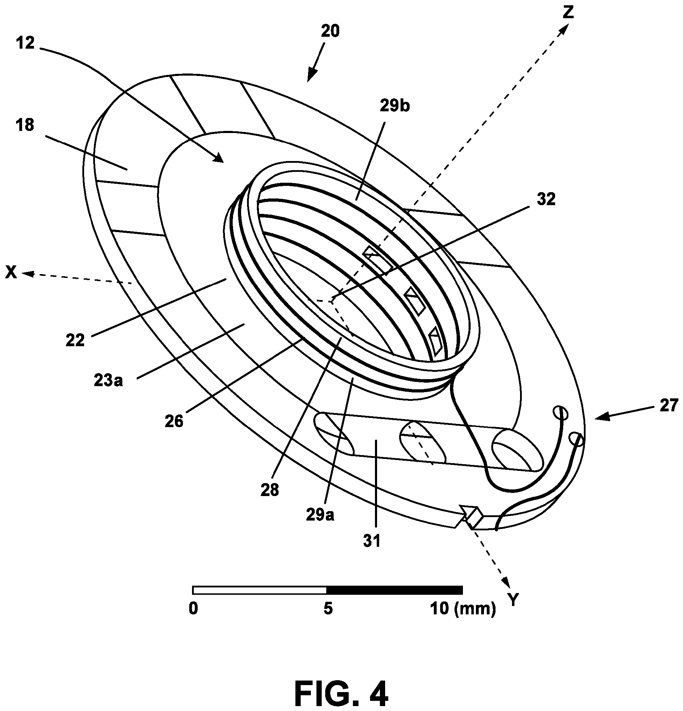

FIG. 4 shows a conceptual diagram of an example of proof mass 12. As discussed with regards to FIG. 3, proof mass 12 comprises a substate 22. Proof mass 12 may comprise one or more integrated coils 26. In some examples, the one or more integrated coils 26 may be integrated in/on the substrate 22. In some examples, one or more integrated coils 26 may be formed on proof mass 12 using laser ablation, such as selective laser etching. In some examples, one or more integrated coils 26 may include wire bond sites 27 at the end of the one or more integrated coils 26. In some examples, wire bond sites 27 are configured to electrically couple to circuitry exterior of proof mass 12. In some examples, sputtering a metallic material, such as gold or aluminum, over the substrate 22, such as over the substrate coil form and capacitive surfaces, and ablating the sputtered metallic material to form the coil turns may form the one or more integrated coils 26. In some examples, chrome may be used as an underlayer for the metallic material, such as gold. In some examples, forming the one or more integrated coils 26 by sputtering the metallic material and laser ablating the metallic material to form the integrated coils 26 may reduce or remove use of adhesive materials, such as epoxy, for forming coils on proof mass 12, which may enable greater temperature ranges when the accelerometer 10 is in use due to not being restricted by temperature ranges of adhesive material. This may enable more uses for accelerometer 10 having one or more integrated coils 26 formed by sputtering the metallic material and laser ablating the metallic material to form the integrated coils 26. In some examples, one or more integrated coils 26 may be made separately and welded on after surfaces of substrate 22 are polished.

One or more integrated coils 26 may be wrapped around a coil form 28 portion of proof mass 12. As shown as an example in FIG. 4, the coil form 28 portion extends along a z-axis and extends perpendicular to the top surface 23a and/or bottom surface 23b. In some examples, as shown in FIG. 4, one or more integrated coils 26 may be wrapped around both an outer circumferential portion of coil form 28 and an inner circumferential portion of coil form 28. Forming one or more etched apertures 24 between top surface 23a and bottom surface 23b of substrate 22 may enable one or more surfaces 23a, 23b of substrate 22 to be metallized while reducing the mass of proof mass 12 by forming one or more etched apertures 24 between the surfaces 23a, 23b.

In some examples, a proof mass 12 with one or more integrated coils 26, formed by laser ablation, such as selective laser etching, on the proof mass 12 may reduce or remove the differences of TCE between the one or more integrated coils 26 and the proof mass 12. Forming one or more integrated coils 26 on proof mass 12 with selective laser etching may provide less or no uncertainty of the location of the one or more integrated coils 26, may reduce or remove welds or heavy copper, and may reduce or remove TCE differences between the one or more integrated coils 26 and the substrate 22.

The width of one or more integrated coils 26 may be adjusted to reliably provide current to create a Lorentz force on the proof mass 12 that may be equal and opposite to a sensed acceleration inertial force.

FIG. 5 shows a side-view diagram of an example of proof mass 12. As discussed with regards to FIGS. 3-4, proof mass 12 comprises a substate 22. Proof mass 12 may have one or more etched apertures 24 in the substrate 22. In some examples, one or more apertures 24 may be formed underneath a surface of substrate 22. The one or more etched apertures 24 may be formed by selective laser etching. Proof mass 12 may comprise one or more integrated coils 26. In some examples, one or more integrated coils 26 may be formed on proof mass 12 using laser ablation, such as selective laser etching.

As shown as an example in FIG. 5, one or more etched apertures 24 may be formed between surfaces 23a, 23b of substrate 22 where top surface 23a and bottom surface 23b of substrate 22 remain continuous and the one or more etched apertures 24 is formed between top surface 23a and bottom surface 23b of substrate 22 to remove mass of proof mass 12. In some examples, the location and/or size of the one or more etched apertures 24 in substrate 22 may correspond to a width and/or a number of turns of the one or more integrated coils 26 on coil form 28 of proof mass 12. In some examples, one or more etched apertures 24 may be formed on coil form 28 of proof mass 12. In some examples, one or more etched apertures 24 may be formed on both substrate 22 and coil form 28 of proof mass 12.

In some examples, the one or more apertures 24 may be selectively etched at one or more depths below a top surface 23a of the quartz substrate 22 and above a bottom surface 23b of the quartz substrate 22. For example, a fused quartz substrate may have a depth, and the manufacturer may selective laser etch material of the fused quartz substrate "beneath" top surface 23a and/or "above" bottom surface 23b, e.g., a distance within the bulk of the fused quartz substrate from top surface 23a and/or bottom surface 23b. For example, the manufacturer may selective laser etch material between top surface 23a of proof mass 12 and bottom surface 23b of proof mass 12, e.g., by irradiating material of the substrate 22 corresponding to the one or more apertures 24 without etching the material of substrate 22 that remains after the one or more apertures are etched.

In one or more examples, the accelerometers described herein may utilize hardware, software, firmware, or any combination thereof for achieving the functions described. Those functions implemented in software may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure.

Instructions may be executed by one or more processors within the accelerometer or communicatively coupled to the accelerometer. The one or more processors may, for example, include one or more DSPs, general purpose microprocessors, application specific integrated circuits ASICs, FPGAs, or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for performing the techniques described herein. Also, the techniques could be fully implemented in one or more circuits or logic elements.

The techniques of this disclosure may be implemented in a wide variety of devices or apparatuses that include integrated circuits (ICs) or sets of ICs (e.g., chip sets). Various components, modules, or units are described in this disclosure to emphasize functional aspects of devices configured to perform the disclosed techniques, but do not necessarily require realization by different hardware units. Rather, various units may be combined or provided by a collection of interoperative hardware units, including one or more processors as described above, in conjunction with suitable software and/or firmware.

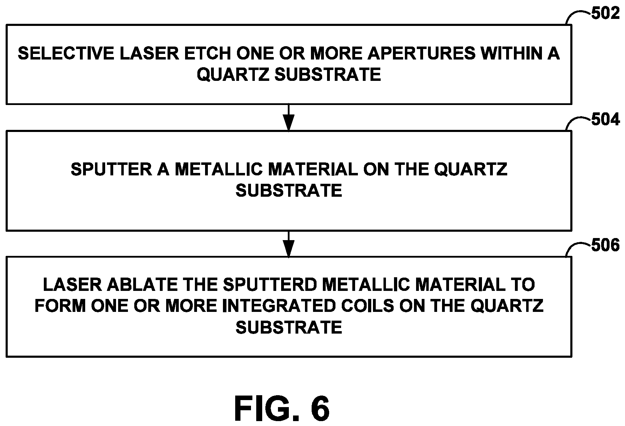

FIG. 6 is a flow diagram illustrating an example technique of making a proof mass. FIG. 6 is described with respect to proof mass 12 of FIGS. 3-5. However, the techniques of FIG. 6 may be utilized to make different proof masses and/or additional or alternative accelerometer systems.

In some examples, a manufacturer may selective laser etch one or more apertures 24 within a quartz substrate 22 (502). In some examples, the manufacturer may selective laser etch at least one of a location or size the one or more apertures to correspond to at least one of a width or a number of turns of the one or more formed integrated coils 26.

In some examples, the manufacturer may sputter a metallic material, such as gold or aluminum, on the quartz substrate 22(504). In some examples, the manufacturer may laser ablate the sputtered metallic material to form one or more integrated coils 26 on the quartz substrate 22 (506). In some examples, the manufacturer may laser ablate the sputtered metallic material to form the at least one integrated coils 26 so at least one of a width or a number of turns of the one or more integrated coils 26 correspond to at least one of a location or size the selectively laser etched one or more apertures 24.

In some examples, the manufacturer may selective laser etch the one or more apertures 24 at one or more depths below a top surface 23a of the quartz substrate 22 and above a bottom surface 23b of the quartz substrate 22. For example, a fused quartz substrate may have a depth, and the manufacturer may selective laser etch material of the fused quartz substrate "beneath" top surface 23a and/or "above" bottom surface 23b, e.g., a distance within the bulk of the fused quartz substrate from top surface 23a and/or bottom surface 23b. For example, the manufacturer may selective laser etch material between top surface 23a of proof mass 12 and bottom surface 23b of proof mass 12, e.g., by irradiating material of the substrate 22 corresponding to the one or more apertures 24 without etching the material of substrate 22 that remains. The proof mass assembly 20 and each of its components may then have substantially the same CTE.

Additional method and devices of the disclosure are described in the following aspects.
Example 1: A proof mass includes a substrate; one or more etched apertures in the substrate; and one or more integrated coils, wherein the one or more etched apertures are formed by selective laser etching, wherein the one or more integrated coils are formed by laser ablation.
Example 2: The proof mass of example 1, wherein the one or more apertures are positioned between a top surface of the substrate and a bottom surface of the substrate.
Example 3: The proof mass of any of examples 1 and 2, wherein the one or more apertures are positioned on the substrate to place a center of mass of the proof mass at a geometric center of the proof mass.
Example 4: The proof mass of any of examples 1 through 3, wherein the proof mass further comprises one or more integrated coils, wherein the one or more integrated coils are formed by laser ablation.
Example 5: The proof mass of any of examples 1 through 4, wherein at least one of a location or size of the one or more etched apertures correspond to at least one of a width or a number of turns of the one or more integrated coils.
Example 6: The proof mass of any of examples 1 through 5, wherein the substrate comprises a monolithic substrate.
Example 7: The proof mass of any of examples 1 through 6, wherein the substrate comprises a quartz substrate.
Example 8: The proof mass of any of examples 1 through 7, wherein the substrate comprises a fused quartz substrate.
Example 9: A proof mass assembly includes a proof mass having one or more etched apertures; a proof mass support; and a flexure connecting the proof mass to the proof mass support, wherein the proof mass is configured to rotate relative to the proof mass support via the flexure, wherein the one or more etched apertures are formed by selective laser etching.
Example 10: The proof mass assembly of example 9, wherein the one or more apertures are positioned between a top surface of the proof mass and a bottom surface of the proof mass.
Example 11: The proof mass assembly of any of examples 9 and 10, wherein the one or more apertures are positioned on the proof mass to place a center of mass of the proof mass at a geometric center of the proof mass.
Example 12: The proof mass assembly of any of examples 9 through 11, wherein the substrate further comprises one or more integrated coils positioned on the proof mass, wherein the one or more integrated coils are formed by laser ablation.
Example 13: The proof mass assembly of example 12, wherein at least one of a location or size of the one or more etched apertures correspond to at least one of a width or a number of turns of the one or more integrated coils.
Example 14: The proof mass assembly of any of examples 9 through 13, wherein the substrate comprises a monolithic substrate.
Example 15: The proof mass assembly of any of examples 9 through 14, wherein the substrate comprises a quartz substrate.
Example 16: The proof mass assembly of any of examples 9 through 15, wherein the substrate comprises a fused quartz substrate.
Example 17: A method includes selective laser etching one or more isolated apertures within a proof mass; sputtering a metallic material on surface of the proof mass; and laser ablating the sputtered metallic material to form one or more integrated coils on the proof mass.
Example 18: The method of example 17, further includes selective laser etching the one or more apertures between a top surface of the proof mass and a bottom surface of the proof mass.
Example 19: The method of example 18, further includes selective laser etching the one or more apertures to place a center of mass of the proof mass at a geometric center of the proof mass.
Example 20: The method of any of examples 17 through 19, further includes selective laser etching at least one of a location or size the one or more apertures to correspond to at least one of a width or a number of turns of the one or more formed integrated coils.

The techniques described in this disclosure may be implemented, at least in part, in hardware, software, firmware, or any combination thereof. For example, various aspects of the described techniques may be implemented within one or more processors, including one or more microprocessors, DSPs, ASICs, FPGAs, or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of this disclosure.

Such hardware, software, and firmware may be implemented within the same device or within separate devices to support the various techniques described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

The techniques described in this disclosure may also be embodied or encoded in an article of manufacture including a computer-readable storage medium encoded with instructions. Instructions embedded or encoded in an article of manufacture including a computer-readable storage medium, may cause one or more programmable processors, or other processors, to implement one or more of the techniques described herein, such as when instructions included or encoded in the computer-readable storage medium are executed by the one or more processors. Computer readable storage media may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

In some examples, a computer-readable storage medium may include a non-transitory medium. The term "non-transitory" may indicate that the storage medium is not embodied in a carrier wave or a propagated signal. In certain examples, a non-transitory storage medium may store data that can, over time, change (e.g., in RAM or cache).

Various examples have been described. These and other examples are within the scope of the following claims.

## Claims

1. A proof mass comprising:
a substrate;
one or more etched apertures in the substrate; and
one or more integrated coils,
wherein the one or more etched apertures are formed by selective laser etching,
wherein the one or more integrated coils are formed by laser ablation.

2. The proof mass of claim 1, wherein the one or more apertures are positioned between a top surface of the substrate and a bottom surface of the substrate.

3. The proof mass of any of claims 1-2, wherein the one or more apertures are positioned on the substrate to place a center of mass of the proof mass at a geometric center of the proof mass.

4. The proof mass of any of claims 1-3, wherein the proof mass further comprises one or more integrated coils,
wherein the one or more integrated coils are formed by laser ablation.

5. The proof mass of any of claims 1-4, wherein at least one of a location or size of the one or more etched apertures correspond to at least one of a width or a number of turns of the one or more integrated coils.

6. The proof mass of any of claims 1-5, wherein the substrate comprises a monolithic substrate.

7. The proof mass of any of claims 1-6, wherein the substrate comprises a quartz substrate.

8. The proof mass of any of claims 1-7, wherein the substrate comprises a fused quartz substrate.

9. A proof mass assembly comprising a substrate, the substrate comprising:
a proof mass having one or more etched apertures;
a proof mass support; and
a flexure connecting the proof mass to the proof mass support, wherein the proof mass is configured to rotate relative to the proof mass support via the flexure,
wherein the one or more etched apertures are formed by selective laser etching.

10. The proof mass assembly of claim 9, wherein the one or more apertures are positioned between a top surface of the proof mass and a bottom surface of the proof mass.

11. The proof mass assembly of any of claims 9-10, wherein the one or more apertures are positioned on the proof mass to place a center of mass of the proof mass at a geometric center of the proof mass.

12. The proof mass assembly of any of claims 9-11, wherein the substrate further comprises one or more integrated coils positioned on the proof mass,
wherein the one or more integrated coils are formed by laser ablation.

13. The proof mass assembly of claim 12, wherein at least one of a location or size of the one or more etched apertures correspond to at least one of a width or a number of turns of the one or more integrated coils.

14. The proof mass assembly of any of claims 9-13, wherein the substrate comprises a monolithic substrate.

15. A method, comprising:
selective laser etching one or more isolated apertures within a proof mass;
sputtering a metallic material on surface of the proof mass; and
laser ablating the sputtered metallic material to form one or more integrated coils on the proof mass.
